# EUROPÄISCHE PATENTANMELDUNG

(11) **EP 0 984 286 A1**
(43) Veröffentlichungstag der Anmeldung: **08.03.2000**
(21) Anmeldenummer: 99112884.4
(22) Anmeldetag: 03.07.1999
(51) Int. Cl.: G01P 3/44

(54) **Dichtungsanordnung mit integriertem Drehzahlsensor**

(30) Priorität: 28.08.1998 DE 19839297
(71) Anmelder: Firma Carl Freudenberg, 69469 Weinheim (DE)
(72) Erfinder: Guth, Wolfgang, Dr., 69514 Laudenbach (DE); Bergmann, Günter, 68542 Heddesheim (DE); von Geisau, Markus, 68163 Mannheim (DE)

(57) **Zusammenfassung**

Dichtungsanordnung, umfassend einen Dichtring (1) mit zumindest einer dynamisch beanspruchten Dichtlippe (2), die ein erstes Maschinenelement (3) dichtend berührt, wobei zur Erfassung von Drehbewegungen des ersten Maschinenelements (3) relativ zu einem zweiten Maschinenelement (4) ein Multipolring (5) aus einem magnetisierten Elastomerwerkstoff mit einem Trägerring (6) verbunden und an einem Drehzahtsensor (7) vorbei beweglich ist, wobei der Trägerring (6) ein axial in Richtung des Dichtrings (1) offenes, im wesentlichen C-förmiges Profil aufweist und mit dem ersten Maschinenelement (3) drehfest verbunden ist und wobei der mit dem ersten Maschinenelement (3) verbundene erste Schenkel (8) des Trägerrings (6) und die Dichtlippe (2) einander mit axialem Abstand benachbart zugeordnet sind.

## Beschreibung

### Technisches Gebiet

Die Erfindung betrifft eine Dichtungsanordnung.

### Stand der Technik

Aus der EP 0 607 719 A1 ist eine Dichtungsanordnung bekannt, umfassend einen Dichtring mit dynamisch beanspruchten Dichtlippen, die aus elastomerem Werkstoff besteht, wobei die dynamisch beanspruchten Dichtlippen die Gegenlauffläche eines Trägerrings dichtend umschließen. Der Trägerring ist auf die abzudichtende Welle aufgepreßt und trägt den aus einem magnetisierten Elastomerwerkstoff bestehenden Multipolring. Die Dichtlippen des Dichtrings sind auf der dem Multipolring abgewandten Seite des Trägerrings angeordnet, wobei eine der dynamisch beanspruchten Dichtlippen als Vorschaltdichtung ausgebildet ist. Bei der Kassettenform der vorbekannten Dichtungsanordnung mit auf die Welle aufgepreßtem Trägerring, der die Gegenlauffläche für die dynamisch beanspruchten Dichtlippen bildet, ist von Nachteil, daß der Trägerring nicht ausgetauscht werden kann, ohne die radial anlaufende Dichtlippe zu beschädigen und daß der Drehzahlsensor axial angeordnet werden muß, was bei Einbauräumen, bei denen die Platzverhältnisse in axialer Richtung beengt sind, nachteilig ist.

### Darstellung der Erfindung

Der Erfindung liegt die Aufgabe zugrunde, die zuvor genannten Nachteile zu vermeiden und eine Dichtungsanordnung zu zeigen, die diesbezüglich verbesserte Gebrauchseigenschaften während einer verlängerten Gebrauchsdauer aufweist.

Diese Aufgabe wird erfindungsgemäß mit den Merkmalen von Anspruch 1 gelöst. Auf vorteilhafte Ausgestaltungen nehmen die Unteransprüche bezug.

Zur Lösung der Aufgabe ist eine Dichtungsanordnung vorgesehen, umfassend einen Dichtring mit zumindest einer dynamisch beanspruchten Dichtlippe, die ein erstes Maschinenelement dichtend berührt, wobei zur Erfassung von Drehbewegungen des ersten Maschinenelements relativ zu einem zweiten Maschinenelement ein Multipolring aus einem magnetisierten Elastomerwerkstoff mit einem Trägerring verbunden und an einem Drehzahlsensor vorbei beweglich ist, wobei der Trägerring ein axial in Richtung des Dichtrings offenes, im wesentlichen C-förmiges Profil aufweist und mit dem ersten Maschinenelement drehfest verbunden ist und wobei der mit dem ersten Maschinenelement verbundene erste Schenkel des Trägerrings und die Dichtlippe einander mit axialem Abstand benachbart zugeordnet sind. Die axiale Breite des ersten Schenkels ist derart bemessen, daß sich einerseits eine zuverlässige, drehfeste Verbindung mit dem ersten Maschinenelement ergibt und andererseits die dem Dichtring zugewandte Stimseite des ersten Schenkels der Dichtlippe mit axialem Abstand benachbart zugeordnet ist. Bei einer derartigen Ausgestaltung ist von Vorteil, daß der mit dem Multipolring verbundene Trägerring bedarfsweise problemlos separat austauschbar ist, ohne an der relativen Zuordnung des Dichtrings zum ersten Maschinenelement etwas zu verändern. Dadurch, daß die vergleichsweise empfindliche, dynamisch beanspruchte Dichtlippe vom Trägerring nicht berührt wird, wird beim Auswechseln des Trägerrings mit dem Multipolring eine Beschädigung/Zerstörung der Dichtlipppe, die aus einem polymeren Werkstoff oder einem Werkstoff mit geringem Reibungskoeffizient, wie beispielsweise PTFE besteht, sicher vermieden.

Der Trägerring besteht bevorzugt aus einem metallischen Werkstoff und ist durch eine Preßpassung mit dem ersten Maschinenelement drehfest verbunden.

Der dem ersten Schenkel radial gegenüberliegende zweite Schenkel ist bevorzugt mit dem Multipolring verbunden. Dabei besteht generell die Möglichkeit, daß der Multipolring den zweiten Schenkel nur auf der dem ersten Maschinenelement abgewandten Seite umschließt. Im Hinblick auf eine verbesserte, dauerhaltbarere Verbindung des Multipolrings am Trägerring besteht jedoch auch die Möglichkeit, daß der Multipolring die in Richtung des Dichtrings offene Stimseite des zweiten Schenkels zumindest teilweise umschließt.

Der Multipolring kann mit dem zweiten Maschinenelement ein Dichtlabyrinth bilden. Das Dichtlabyrinth verhindert eine Beaufschlagung der dynamisch beanspruchten Dichtlippe mit abrasiv wirkenden Verunreinigungen aus der Umgebung.

Der Trägerring und der Multipolring können adhäsiv verbunden sein. Bevorzugt werden beide Teile miteinander vulkanisiert. Besteht der Trägerring aus einem metallischen Werkstoff, wird dieser vor der Vulkanisation beispielsweise zinkphosphatiert und mit einem Haftvermittler beschichtet. Durch die Vulkanisation sind unerwünschte Relativbewegungen zwischen dem Trägerring und dem Multipolring sicher ausgeschlossen, so daß eine besonders genaue Drehzahlerfassung der beiden Maschinenelemente, relativ zueinander, ermöglicht wird.

Das erste Maschinenelement kann durch die Kurbelwelle einer Verbrennungskraftmaschine und das zweite Maschinenelement durch ein Kurbelgehäuse oder durch einen Kurbelgehäuseverschlußdeckel gebildet sein. Für einen derartigen Anwendungsfall ist die beanspruchte Dichtungsanordnung besonders vorteilhaft, weil das hintere Ende der Kurbelwelle der ideale Ort zur Bestimmung der Kurbelwellenlaufruhe ist.

### Ausführung der Erfindung

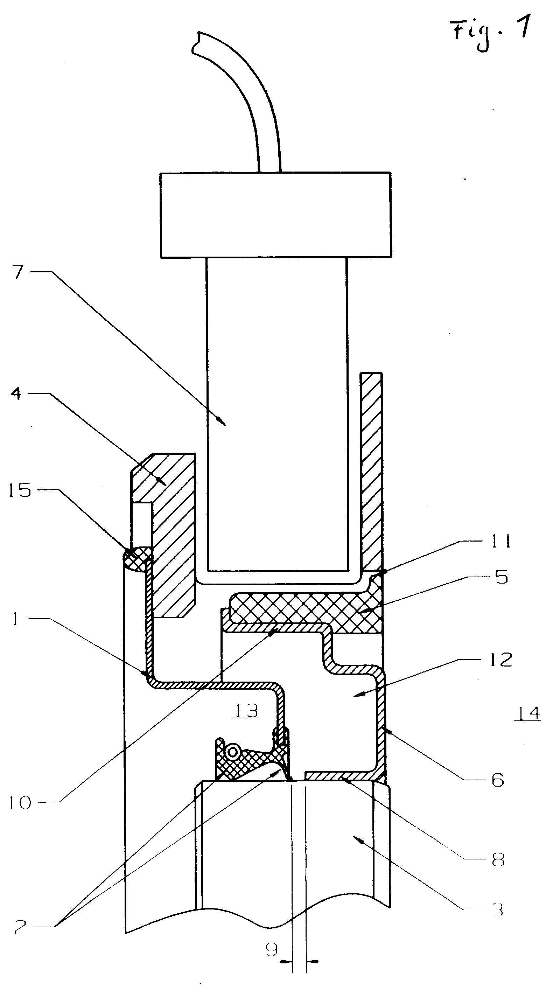

Die beanspruchte Dichtungsanordnung wird nachfolgend anhand der Zeichnung weiter verdeutlicht. Diese zeigt ein Ausführungsbeispiel in schematischer Darstellung.

In der Zeichnung ist ein Ausschnitt aus einem Kurbelgehäuseverschlußdeckel einer Verbrennungskraftmaschine gezeigt, wobei der Kurbelgehäuseverschlußdeckel durch das zweite Maschinenelement 4 gebildet ist und das als Kurbelwelle ausgebildete erste Maschinenelement 3 mit radialem Abstand umschließt. Der abzudichtende Raum 13 ist durch einen innerhalb des Spalts 12 angeordneten Dichtring 1 zur Umgebung 14 hin abgedichtet, wobei der Dichtring 1 in diesem Ausführungsbeispiel zwei dynamisch beanspruchte Dichtlippen 2 und eine statisch beanspruchte Dichtlippe 15 aufweist, die am hinteren Ende eines hier nicht dargestellten Motorblocks abdichtet. Ein weiterer Teil der Dichtungsanordnung ist durch den Multipolring 5 gebildet, der aus einem magnetisierten, elastomeren Werkstoff besteht und in Umfangsrichtung beispielsweise aufeinanderfolgende Nord- und Südpole aufweist. Der Multipolring 5 bewegt sich gemeinsam mit dem ersten Maschinenelement 3 um dessen Achse und relativ zum ortsfesten Drehzahlsensor 7, wobei sich die Nord- und Südpole des Multipolrings 5 zur induktiven Erfassung der Drehbewegung abwechselnd an dem relativ ortsfesten Drehzahlsensor 7 vorbeibewegen. Durch eine Unstetigkeitsstelle in der Aufeinanderfolge der Nord- und Südpole läßt sich der obere Totpunkt eines Zylinders bestimmen.

Der Trägerring 6 hat ein axial in Richtung des Dichtrings 1 offenes, im wesentlichen C-förmigen Profil, wobei sich der zweite Schenkel 10 in axialer Richtung bis über die dynamisch beanspruchte Dichtlippen 2 erstreckt. Die Dichtungsanordnung baut in axialer Richtung besonders kompakt.

Der Multipolring 5 bildet mit dem zweiten Maschinenelement 4 ein Dichtlabyrinth 11, um Verunreinigungen aus der Umgebung 14, wie beispielsweise Schmutz, Staub oder Abrieb der Kupplungsscheibe, zuverlässig von den dynamisch beanspruchten Dichtlippen 2 fernzuhalten.

### Bezugszeichenliste

- 1: Dichtring / Dichtflansch
- 2: Dichtlippe
- 3: erstes Maschinenelement, Kurbelwelle
- 4: zweites Maschinenelement, Kurbelgehäuseverschlußdeckel
- 5: Multipolring
- 6: Trägerring
- 7: Drehzahlsensor
- 8: erster Schenkel
- 9: axialer Abstand zwischen der Dichtlippe 2 und dem ersten Schenkel 8
- 10: zweiter Schenkel
- 11: Dichtlabyrinth
- 12: Spalt zwischen erstem und zweitem Maschinenelement
- 13: abzudichtender Raum
- 14: Umgebung
- 15: statisch beanspruchte Dichtlippe

## Patentansprüche

1. Dichtungsanordnung, umfassend einen Dichtring (1) mit zumindest einer dynamisch beanspruchten Dichtlippe (2), die ein erstes Maschinenelement (3) dichtend berührt, wobei zur Erfassung von Drehbewegungen des ersten Maschinenelements (3) relativ zu einem zweiten Maschinenelement (4) ein Multipolring (5) aus einem magnetisierten Elastomerwerkstoff mit einem Trägerring (6) verbunden und an einem Drehzahlsensor (7) vorbei beweglich ist, wobei der Trägerring (6) ein axial in Richtung des Dichtrings (1) offenes, im wesentlichen C-förmiges Profil aufweist und mit dem ersten Maschinenelement (3) drehfest verbunden ist und wobei der mit dem ersten Maschinenelement (3) verbundene erste Schenkel (8) des Trägerrings (6) und die Dichtlippe (2) einander mit axialem Abstand (9) benachbart zugeordnet sind.

2. Dichtungsanordnung nach Anspruch 1, dadurch gekennzeichnet, daß der dem ersten Schenkel (8) radial gegenüberliegende zweite Schenkel (10) mit dem Multipolring (5) verbunden ist.

3. Dichtungsanordnung nach einem der Ansprüche 1 oder 2, dadurch gekennzeichnet, daß der Multipolring (5) mit dem zweiten Maschinenelement (4) ein Dichtlabyrinth (11) bildet.

4. Dichtungsanordnung nach einem der Ansprüche 1 bis 3, dadurch gekennzeichnet, daß der Multipolring (5) eine Unstetigkeitsstelle zur Bestimmung des oberen Totpunkts einer Verbrennungskraftmaschine aufweist.

5. Dichtungsanordnung nach einem der Ansprüche 1 bis 4, dadurch gekennzeichnet, daß der Trägerring (6) und der Multipolring (5) adhäsiv verbunden sind.

6. Dichtungsanordnung nach einem der Ansprüche 1 bis 5, dadurch gekennzeichnet, daß das erste Maschinenelement (3) durch die Kurbelwelle einer Verbrennungskraftmaschine und das zweite Maschinenelement (4) durch ein Kurbelgehäuse gebildet ist.
